# EUROPEAN PATENT APPLICATION

(11) **EP 3 269 236 A1**
(43) Date of publication of application: **17.01.2018**
(21) Application number: 16205973.7
(22) Date of filing: 21.12.2016
(51) Int. Cl.: A01M 1/14

(54) **INSECT TRAPPING DEVICE**

(30) Priority: 11.07.2016 WO PCT/US2016/041812
(71) Applicant: The Procter & Gamble Company, Cincinnati, OH 45202 (US)
(72) Inventor: SMITH, Christopher Lawrence, LIBERTY TOWNSHIP, OH Ohio 45011 (US); SADLOWSKI, Eugene Steven, Cincinnati, OH Ohio 45202 (US); WANG, Mike Shuo, CINCINNATI, OH Ohio 45202 (US); MARSDEN, Douglas A., MARBLEHEAD, 01945 (US); GATLIN, Thomas Mitchell, MALDEN, MA Massachusetts 02148 (US); ROSSI, Danilo, 38100 TRENTO (IT); PEDROTTI, Andrea, 38073 CAVEDINE (TRENTO) (IT)
(74) Representative: Hoyng Rokh Monegier LLP

(57) **Abstract**

An insect trapping device having a base and a cartridge is provided. The cartridge has a shell and an insert. The insert is releaseably retained within the shell and has an adhesive portion for trapping insects. Gravitational force can pull the insert from the shell when the cartridge is removed from the base and the shell is squeezed by a user. The insect trapping device can have insect attractants, such as a light source and a heating element.

## Description

### TECHNICAL FIELD

The present disclosure generally relates to insect trapping devices, and more specifically to portable insect trapping devices having replaceable components.

### BACKGROUND

Historically, a variety of pest control devices have been employed to trap insects and other pests. With recent outbreaks of various diseases, infections, and other health risks that are spread by insects, the need for pest control devices has only increased. Such pest control devices typically employ an attraction mechanism for luring pests to the pest control device. Example attraction mechanisms include baits such as food, light, pheromones, or other odorous materials found attractive by the pest. Some pest control devices have historically included an immobilization mechanism to prevent the pest from exiting the pest control device. One type of immobilization mechanism used is a substrate such as a board, paper or other medium having a surface coated with an adhesive. Pests attracted to the pest control device or incidentally coming into contact with the adhesive become trapped by adhesion.

One type of adhesively-coated substrate is commonly referred to as a glueboard. For packaging and shipping purposes, the adhesive layer can be covered by a release paper. The release paper is removed prior to use to expose the adhesive layer so pests can come into contact with the adhesive layer and become entrapped. Such disposable glueboards are routinely replaced to ensure the continued efficacy of the pest control device and to dispose of the pests immobilized by the glueboard.

While the adhesives employed when manufacturing glueboards have proved to be effective for trapping insects, the nature of the adhesive is such that insertion and removal of the glueboard from the pest control device can be problematic. If the adhesive surface of the glueboard accidently comes into contact with other surfaces of the pest control device, the adhesive will cause the glueboard to stick to those surfaces. Likewise, if the skin or clothing of a person installing or removing the glueboard comes into contact with the adhesive surface, the glueboard will stick to the person or the person's clothing. Depending on the configuration of the glueboard, the person removing the glueboard may undesirably come into contact with or close proximity to the trapped insects.

Some types of pest control devices are provided with a glueboard non-removably mounted inside an outer housing, such as a shell. Such arrangement can decrease the likelihood that a user will come in contact with the glueboard. Some examples of these pest control devices are described in PCT patent publications WO 2015/164,849; WO 2015/081,033; and WO2014/134,371. However, there are opportunities for improvement. Indeed, it would be advantageous to provide for an insect trapping device that allows a user to easily remove and dispose of the glueboard without touching any trapped insects or an adhesive. It would also be advantageous to provide an insect trapping device that provides improved techniques for alignment and insertion of replacement glueboards. It would also be advantageous to provide an insect trapping device and its replacement components therefor that can be provided with reduced packaging materials, leading to decreased waste. It would further be advantageous to provide for an insect trapping device that is configured to assist a user in aligning various components and ensuring proper orientation of the components, such as when the user is replacing a spent component with a fresh component, or engaging a shell with a base. It would further be advantageous to provide for an insect trapping device that is sufficiently portable and aesthetically pleasing for use in homes, offices, or other occupied spaces.

### SUMMARY

The invention provides an insert for an insect trapping device, a cartridge comprising such an insert, and a method of using such a cartridge, as defined in the claims.

The present disclosure fulfills one or more of the needs described above by, in one embodiment, an insect trapping device comprising a base and a cartridge comprising an insert and a shell. The shell comprises a front surface defining an opening for receiving a flying or crawling insect, a rear surface, and an opening in a bottom of the shell. The opening in the bottom is disposed adjacent to the base when the cartridge engages the base. The insert comprises an adhesive portion is releaseably retained at least partially within the shell. At least a portion of the insert passes through the opening in the bottom when inserting the insert into the shell. A light source is positioned to illuminate at least a portion of the adhesive portion when the cartridge engages the base.

In another embodiment, an insert for insertion into a shell for use with an insect trapping device, with the shell having one or more protrusions extending from an inner surface of the shell, comprises an adhesive portion comprising an adhesive for trapping an insect and a frame at least partially surrounding the adhesive portion. The frame comprises two side edges and a top portion having a height and a top portion edge that terminates at the side edges. Each of the side edges have an indentation that has top edge that is positioned within 2 mm of the termination of the top portion edge.

In another embodiment, an insert for an insect trapping device comprises an adhesive portion comprising an adhesive for trapping an insect and a frame at least partially surrounding the adhesive portion. The frame comprises two side edges, a bottom edge, and a downwardly depending tab extending downward from the bottom edge. A vertical centerline of the downwardly depending tab is offset from a vertical centerline of the adhesive portion.

In yet another embodiment, a method of making an insert for trapping insects comprises forming a frame, forming a reservoir, inserting an insect attracting composition into the reservoir; and attaching an adhesive portion to at least a portion of the frame.

In another embodiment a crawling insect trap comprises a front housing and a rear housing forming an enclosure defining an opening for receiving a crawling insect. The front housing is connected to the rear housing by a hinge and the enclosure is selectable movable between an open position and a closed position. At least a portion of the front housing is separated from the rear housing in the open position. The crawling insect trap further comprises an insert having an adhesive portion. The insert is releaseably retained within at least a portion of the enclosure when the enclosure is in the closed position.

In another embodiment, a cartridge for use with a base comprises an insert comprising an adhesive portion and a shell comprising a front surface defining an opening for receiving a flying or crawling insect, a rear surface and a bottom comprising an opening. The opening in the bottom is disposed adjacent to the base when the cartridge engages the base. The insert is releaseably retained at least partially within the shell and at least a portion of the insert passes through the opening in the bottom when inserting the insert into the shell. The insert drops out of the opening in the bottom in response to an application of an inwardly directed force to one or more of the front surface of the shell or a rear surface of the shell by a user.

In another embodiment, a kit comprises an insert comprising an adhesive portion and a cartridge, with the cartridge for use with a base. The cartridge of the kit has a shell comprising a front surface defining an opening for receiving a flying or crawling insect, a rear surface and a bottom comprising an opening. The opening in the bottom is disposed adjacent to the base when the cartridge engages the base. The insert is releaseably retained at least partially within the shell and at least a portion of the insert passes through the opening in the bottom when inserting the insert into the shell. The insert drops out of the opening in the bottom in response to an application of an inwardly directed force to one or more of the front surface of the shell or a rear surface of the shell by a user

In yet another embodiment, a method of using a cartridge comprises grasping a shell having an insert at least partially disposed therein. The insert comprises an adhesive portion and the shell comprises a front surface defining an opening for receiving a flying or crawling insect, a rear surface and a bottom opening. The method further comprises applying an inwardly directed force to one or more of the front surface of the shell or the rear surface of the shell. In response to the application of the force, the insert drops out of the opening in the bottom due to gravity.

In another embodiment, a method of using a cartridge comprises, a user grasping a shell comprising an insert, the insert comprising an adhesive portion for trapping insects and the shell comprising a front surface, a rear surface and an opening in a bottom of the shell. Then after that step, applying a force to at least one of the front surface of the shell or the rear surface of the shell and then inserting the insert into the shell through the opening in the bottom until the insert is at least partially disposed therein. Then after that step, releasing the force applied to the at least one of the front surface or the rear surface, wherein upon the release of the force the insert is retained within the shell by a friction fit.

In another embodiment, a cartridge for trapping insects comprises an insert comprising an adhesive portion and a reservoir storing an insect attracting composition. The cartridge further comprises a shell comprising a front surface defining an opening for receiving a flying or crawling insect, a rear surface and a bottom comprising an opening. The insert is releaseably retained at least partially within the shell and at least a portion of the insert passes through the opening in the bottom when inserting the insert into the shell. The reservoir is positioned adjacent the bottom opening when the insert is releaseably retained at least partially within the shell. The insert drops out of the opening in the bottom in response to an application of an inwardly directed force to one or more of the front surface of the shell or a rear surface of the shell by a user.

In another embodiment, an insect trapping device comprises a base and a cartridge comprising an insert and a shell. The shell comprises a front surface defining an opening for receiving a flying or crawling insect, a rear surface, an opening in a bottom of the shell, a first side zone, and a second side zone, wherein the front surface and rear surface join within each of the first and second side zones, and wherein the opening in the bottom is disposed adjacent to the base when the cartridge engages the base. The insert comprises an adhesive portion and the insert is releaseably retained at least partially within the shell and at least a portion of the insert passes through the opening in the bottom when inserting the insert into the shell. When the cartridge is detached from the base, the insert drops out of the shell through the opening in the bottom in response to a user applying an inwardly directed force to one or more of the first and second side zones of the shell. A light source is positioned to illuminate at least a portion of the adhesive portion when the cartridge engages the bases.

In yet another embodiment, an insect trapping device comprises a base and a cartridge comprising an insert and a shell. The shell comprises a front surface defining an opening for receiving a flying or crawling insect, a rear surface, an opening in a bottom of the shell, a first side zone, and a second side zone,. The front surface and rear surface join within each of the first and second side zones, and wherein the opening in the bottom is disposed adjacent to the base when the cartridge engages the base. The insert comprises an adhesive portion. The insert is releaseably retained at least partially within the shell and at least a portion of the insert passes through the opening in the bottom when inserting the insert into the shell. When the cartridge is detached from the base, the insert drops out of the shell through the opening in the bottom in response to a user applying an inwardly directed force to one or more of the first and second sides zones of the shell.

In another embodiment, an insert for insertion into a shell of an insect trapping device comprises an adhesive portion comprising an adhesive for trapping an insect and a frame at least partially surrounding the adhesive portion. The insert also comprises a reservoir storing a solid insect attracting composition, the reservoir being located in a lower portion of the insert.

### BRIEF DESCRIPTION OF THE DRAWINGS

The above-mentioned and other features and advantages of the present disclosure, and the manner of attaining them, will become more apparent and the disclosure itself will be better understood by reference to the following description of nonlimiting embodiments of the disclosure taken in conjunction with the accompanying drawings, wherein:
FIG. 1 depicts an example insect trapping device;
FIG. 2 is an exploded view of the insect trapping device depicted in FIG. 1;
FIG. 3A depicts a top view of the shell of FIG. 1;
FIG. 3B depicts a bottom view of the shell of FIG. 1;
FIG. 4 is a cross-sectional view of the shell of FIG. 3A taken along line 4-4;
FIG. 5 depicts a top view of the insert of FIG. 2;
FIG. 6 is a front view of the insert of FIG. 2;
FIG. 7 depicts an isometric view of the base of FIG. 1;
FIG. 8A depicts a cartridge being coupled to a base;
FIG. 8B depicts an insert being released from the shell and being disposed into a trash receptacle;
FIG. 9 depicts an example cartridge for another example insect trapping device;
FIG. 10 depicts an example insect trapping device using the cartridge of FIG. 9;
FIG. 11 is a cross sectional view of the cartridge of FIG. 9;
FIG. 12 is an enlarged portion of FIG. 11;
FIGS. 13-18 depict example insert arrangements;
FIGS. 19A-19B are isometric views of an insert having a light source;
FIGS. 20A-20B are isometric views of an insert having a light source and a reservoir;
FIG. 21 depicts an example shell of an insect trapping device;
FIG. 22 is a cross-sectional view of shell of FIG. 21 taken along line 22-22;
FIG. 23 is a cross-sectional view of the of FIG. 22 when force is applied by a user to its outer surfaces;
FIG. 24 depicts another example insert arrangement;
FIG. 25 depicts an example shell of another insect trapping device;
FIG. 26 is a cross-sectional view of shell of FIG. 25 taken along line 26-26;
FIG. 27 is a cross-sectional view of the of FIG. 26 when force is applied by a user to its outer surfaces;
FIG. 28 depicts an example shell of another insect trapping device;
FIG. 29 is a cross-sectional view of shell of FIG. 28 taken along line 29-29;
FIG. 30 is a cross-sectional view of the of FIG. 29 when force is applied by a user to its outer surfaces;
FIG. 31 depicts another example insert arrangement;
FIG. 32 depicts an example insect trapping device in a closed position;
FIG. 33 depicts the insect trapping device of FIG. 32 in an open position;
FIG. 34 is an exploded view of the insect trapping device of FIG. 32; and
FIGS. 35-36 depict example inserts usable with the insect trapping device of FIG. 32.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. All publications, patent applications, patents, and other references mentioned herein are incorporated by reference in their entirety. In case of conflict, the present specification, including definitions, will control. In addition, the materials, methods, and examples are illustrative only and not intended to be limiting.

Other features and advantages of the invention will be apparent from the following detailed description, and from the claims.

### DETAILED DESCRIPTION

The present disclosure provides for insect trapping devices, methods of making insect trapping devices, and methods of using insect trapping devices. Various nonlimiting embodiments of the present disclosure will now be described to provide an overall understanding of the principles of the function, design and use of the insect trapping devices disclosed herein. One or more examples of these nonlimiting embodiments are illustrated in the accompanying drawings. Those of ordinary skill in the art will understand that the methods described herein and illustrated in the accompanying drawings are nonlimiting example embodiments and that the scope of the various nonlimiting embodiments of the present disclosure are defined solely by the claims. The features illustrated or described in connection with one nonlimiting embodiment can be combined with the features of other nonlimiting embodiments. Such modifications and variations are intended to be included within the scope of the present disclosure.

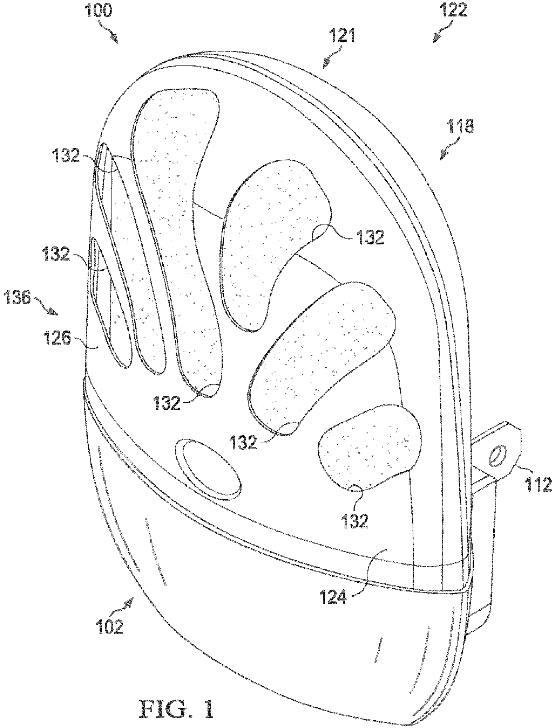

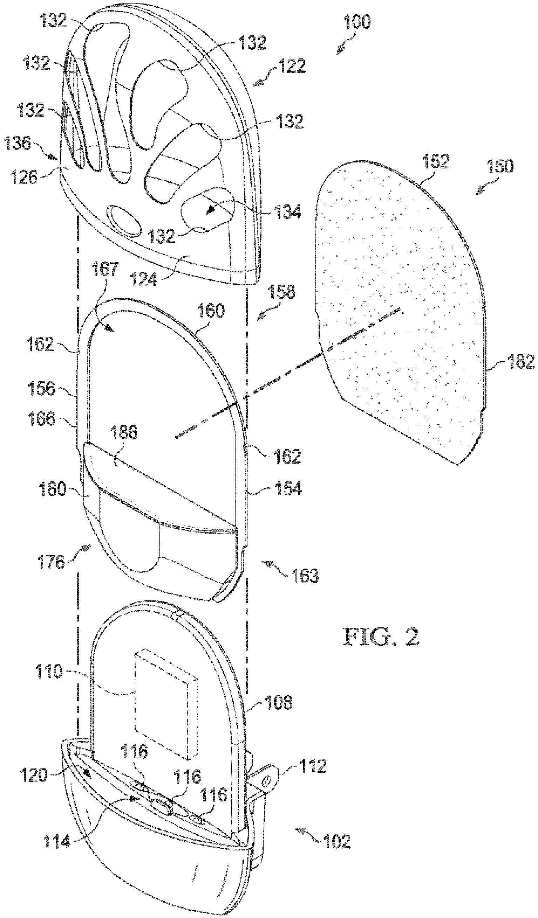

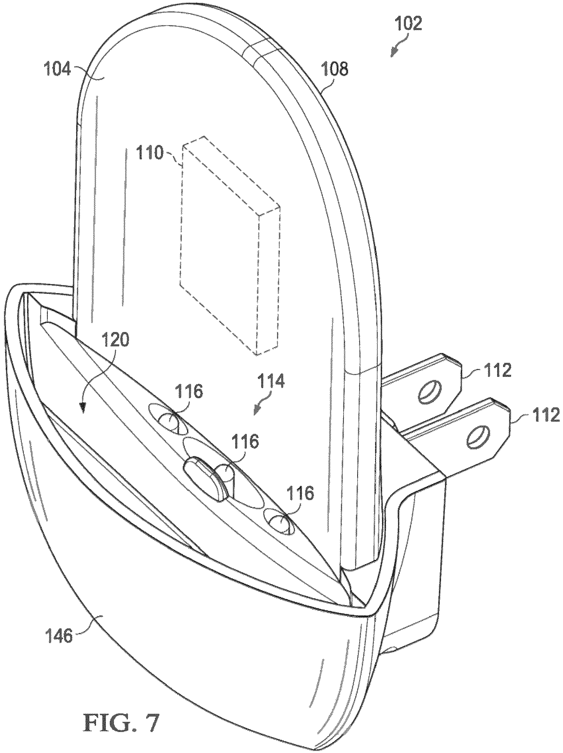

Referring now to FIGS. 1-2, an example insect trapping device 100 in accordance with one non-limiting embodiment is depicted. FIG. 2 is an exploded view of the insect trapping device 100 depicted in FIG. 1. The insect trapping device 100 has a base 102 and a cartridge 118 that can be selectively coupled to the base 102 by a user. The cartridge 118 includes an insert 150 and a shell 122 that is configured to receive the insert 150. As described in more detail below, the insert 150 can include an adhesive portion 152 that immobilizes insects that contact the adhesive portion 152. The base 102 can include prongs 112 such that the insect trapping device 100 can be plugged into a suitable power source, such as a wall socket. In other configurations the insect trapping device 100 can draw power from an onboard battery or other type of power source (i.e., solar). The insect trapping device 100 can utilize a variety of attractants to draw insects into the device, such as heat, light, chemical composition attractants, and so forth, some of which may require a power source to operate. As such, the power source may be used to energize various onboard components, such has a heat generating element 110 (FIG. 7), a light source 114 (FIG. 7), and/or other components which may serve to attract insects to the insect trapping device 100. As described in more detail below, a user may interact with the shell 122 to release the insert 150, such as to replace a spent insert with a fresh insert. Beneficially, due to the structural arrangement of the shell 122 and the insert 150, the user may release the insert 150 by applying force to a certain portion of the shell 122. As such, the user does not need to physically contact any portion of the insert 150, such as the adhesive portion 152, in order to release and dispose of the insert 150.

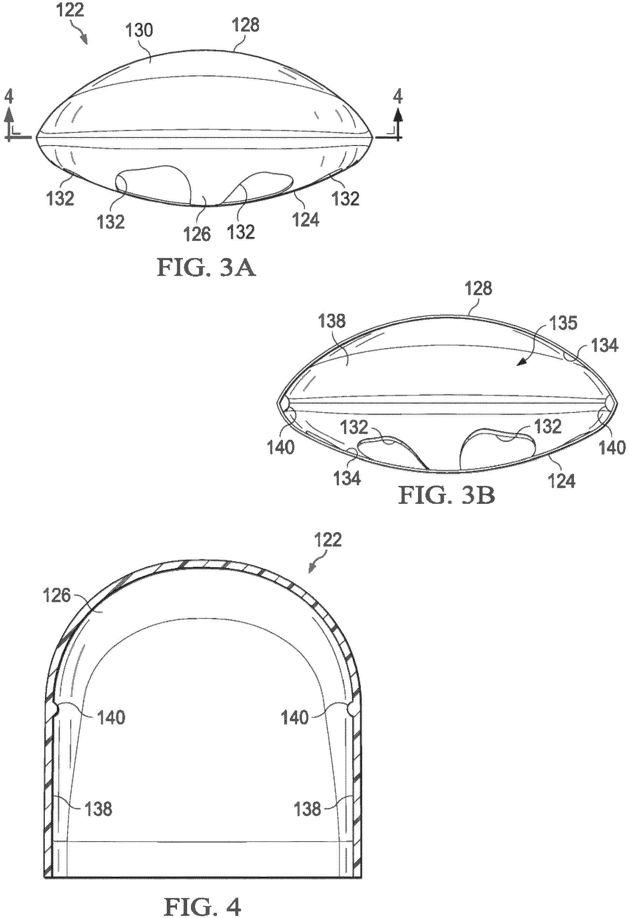

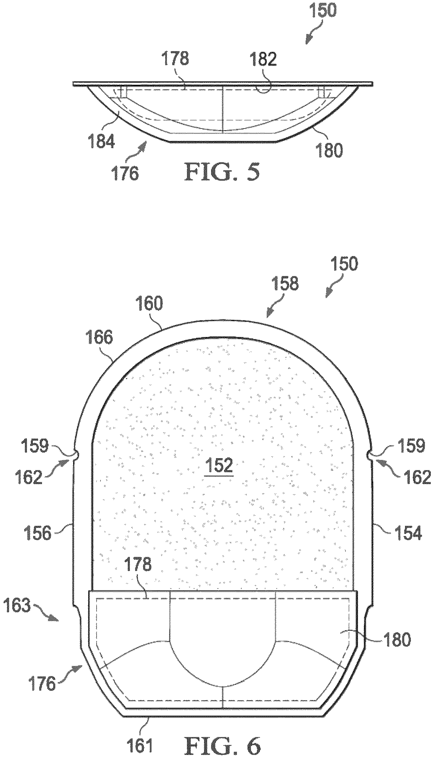

FIG. 3A depicts a top view of the example shell 122 shown in FIG. 1, FIG. 3B is a bottom view of the example shell 122 shown in FIG. 1, and FIG. 4 is a cross-sectional view of the shell 122 taken along line 4-4 in FIG. 3A. Referring now to FIGS. 1-4, the shell 122 may have front housing 124 that has a front surface 126 and a rear housing 128 that has a rear surface 130. The front housing 124 and the rear housing 128 can be separate pieces that are coupled together to form the shell 122, or the front housing 124 and the rear housing 128 can be a unitary piece which integrally forms the shell 122. The front housing 124 and the rear housing 128 substantially can enclose the adhesive portion 152 of the insert 150 once the insert is seated within the shell 122. The front surface 126 may define one or more openings 132 for receiving a flying or crawling insect such that they will come in contact with the adhesive portion 152 of the insert 150. While FIGS. 1-4 depict one example arrangement of openings 132, it is to be appreciated that the size, arrangement, and number of the one or more openings 132 can vary. The front housing 124 may be convex and spaced apart from the rear housing 128 at the bottom of the shell 122 such that they collectively define a bottom opening 134 (FIGS. 2 and 3B) that provides access to a cavity 135 defined by an inner surface 138 of the shell 122. The bottom of the shell 122 or insert 150 is determined when the shell 122 or insert 150 is oriented as it would be during use by a consumer to attract and capture the insects. In some configurations, the width of the bottom opening 134, as measured at its widest point, may be slightly wider than a width of a portion of the insert 150, as is described in more detail below. Further, the opposing sides of the bottom opening 134 may be tapered, grooved, or otherwise configured to aid in proper alignment of the insert 150 as it is slid into the shell 122 by a user. A top portion 121 of the shell 122 may be substantially or wholly closed (as shown by way of a non-limiting example in FIG. 1). Further, the top portion 121 may be disposed adjacent to a top portion 158 (FIG. 6) of the insert 150 when the insert 150 is seated within the shell 122.

As described in more detail below, the shell 122 can be configured to mechanically engage the insert 150, such that when the insert 150 is slid into the shell 122 through the bottom opening 134, the insert 150 is held within the shell 122 until the user wishes to dispose of the insert 150 (i.e., subsequent to extended use of the insect trapping device 100). For instance, in some configurations, the shell 122 may include protrusions or other features that selectively engage with or otherwise lock into corresponding elements of an insert 150. In other configurations, a friction-fit (sometimes referred to as interference fit or press-fit) may be utilized, with the outer width of the insert 150 slightly exceeding the inner width of the shell 122. Irrespective of the type of mechanical engagement utilized, the insert 150 may be selectively released from the shell 122 through a user's selective application of inwardly-directed force to one or more designated areas of the outer surface of the shell 122.

FIG. 5 depicts a top view of the example insert 150 and FIG. 6 is a front view of the insert 150. Referring now to FIGS. 1-6, the insert 150 comprises a frame 166 to which an adhesive portion 152 is attached. As used herein, the frame 166 can generally mean a structural member defining a central opening 167 (FIG. 2). The frame 166 can be thin in thickness and width relative to the overall size of the central opening 167. While the frame 166 is shown in FIG. 2 to surround the entire central opening 167, in other configurations the frame 166 can only partially surround the central opening 176. The adhesive portion 152 is to immobilize insects that enter the insect trapping device 100 through one of the openings 132 of the shell 122 and contact the adhesive. In some embodiments, the adhesive portion 152 comprises an adhesive (or an adhesive composition comprising an adhesive), wherein the adhesive or adhesive composition is coated on or otherwise applied to or incorporated in a substrate. The adhesive may be a pressure sensitive adhesive. In some embodiments, the adhesive is an acrylic polymer, butyl rubber, natural rubber, nitrile, silicone, styrene block copolymer, styrene-ethylene/propylene, styrene-isoprene-styrene, and/or vinyl ether adhesive or mixture thereof, for example. The substrate may be provided in a wide variety of forms, such as a film, a woven or a non-woven (including papers). In some embodiments, the substrate is in the form of a film comprising polycarbonate, polyethylene terepthalate (PET) or polypropylene. The substrate may comprise one or more layers. Generally, the thickness of the adhesive portion 152 may be in the range of about 0.01 mm to about 5 mm. In some embodiments, the adhesive thickness may be in the range of about 0.05 mm to about 0.2 mm. The surface area of the adhesive portion 152 can be between about 25 cm² and about 150 cm². The adhesive portion 152 can comprise a transparent or translucent adhesive coated onto a transparent or translucent substrate (such as a film, for example). A releasable liner can be applied to the adhesive portion 152 that is to cover the adhesive portion 152 prior to use. A user can peel away the releasable liner to expose the adhesive portion 152 immediately prior to inserting the insert 150 to the shell 122, for instance.

While the insert 150 is shown to include a frame 166 completely surrounding the adhesive portion 152, this disclosure is not so limited. For instance, the frame 166 may only extend partially around the adhesive portion 152. In one example configuration, the frame 166 may extend along a first vertical side of the adhesive portion 152, across the top of the adhesive portion 152, and down the second vertical side of the adhesive portion 152. In such configuration, the bottom edge of the adhesive portion 152 is unframed. In other configurations, the insert 150 can be frameless, with the adhesive portion 152 applied at least to a central portion of a substrate, with the substrate providing sufficient structural rigidity. Further, the adhesive portion 152 can be planar, as shown, or have other suitable configurations, such as curved, for instance. As shown in FIG. 4 and FIG. 6, the outer perimeter of the frame 166 may be shaped similarly to the shell 122. The frame has a first side edge 154 and a second side edge 156, which are sized to be received into the tapered portions of either side of the bottom opening 134 of the shell 122. The insert may have a height from about 75 mm to about 125 mm and a width from about 50 mm to about 100 mm. The tapered aspect on opposing sides of the bottom opening 134 may aid in alignment of the insert 150 as the user slides the insert 150 into the shell 122. The frame 166 also has a top portion 158 having a height and a top portion edge 160 that terminates at the first and second side edges 154, 156. In some configurations, the height of the top portion edge 160 is between about 30, 40, 50 mm and about 75, 100, 125 mm. The top portion edge 160 can have any suitable shape, such as an arc as shown in FIG. 6.

In some configurations, the insert 150 has a reservoir 176 for storing an insect attracting composition. The insect attracting composition can be provided in a wide variety of forms, including gases, liquids and solids. In some embodiments, the insect attracting composition may be provided in the form of a solid composition comprising one or more agents attractive to an insect. Solid compositions also include semi-solid compositions such as gels, which comprise one or more liquids and one or more gelling agents. The gelling agents may facilitate the formation of a cross-linked network within the composition. The reservoir 176 may also serve to catch fallen insects, such as the insects that were originally immobilized by the adhesive portion 152 but are no longer sufficiently retained by the adhesive portion 152 after drying and becoming brittle. The reservoir 176 may be defined by a front wall 180 and a rear wall 182, with the front wall 180 defining at least part of an opening of the reservoir 176. The front wall 180 may be integrally formed with the frame 166. In some configurations, the reservoir 176 may comprise a ledge 184 that extends along a portion of the reservoir opening to aid in the attachment of a releasable liner 186 to cover the reservoir 176 subsequent to it being filled with an insect attracting composition. The releasable liner 186 for the reservoir may be integral with a releasable liner 186 of the adhesive portion 152. In any event, the releasable liner 186 can be removed from the reservoir 176 prior to a user inserting the insert 150 into the shell 122. The ledge 184 may extend along the front wall 180, as shown in FIG. 5. Additionally or alternatively, the ledge 184 may extend from the rear wall 182. The ledge 184 may be formed by a top surface of the wall 180 (i.e. if the wall 180 has sufficient thickness), or the ledge 184 may be an outwardly directed ledge, an inwardly directed ledge, or combinations thereof. The ledge 184 may have a depth of, for example, from about 1 mm to about 4, 6, or 8 mm. The reservoir 176 may have a depth of about 1 mm and about 30 mm, a width from about 10 mm to about 100 mm, and a height from about 1 mm to about 50 mm. The reservoir 176 can have a volume between about 1 cm³ and 60 cm³. The reservoir 176 can be positioned such that once the insert 150 is engaged with the shell 122 and the shell 122 is engaged with the base 102, the insect attracting composition may evaporate or disperse through the openings 132. Reservoirs in accordance with the present disclosure, such as reservoir 176, may be made as one piece, including its rear wall 182, which is then attached to the frame 166. Alternatively, reservoirs, including its rear wall, may be integrally formed with the frame from the same material, such as by injection molding process. The adhesive portion 152 may terminate adjacent the reservoir opening or may downwardly extend past the reservoir opening and across the rear wall 182 of the reservoir. Thus, in some configurations, the rear wall 182 (FIG. 5) is formed by the adhesive portion 152, such as for reservoir that are not filled with heated attractants during manufacture. Since the insect attracting composition attractant within the reservoir 176 may evaporate during use, it is advantageous that the reservoir 176 is coupled to the adhesive portion 152 so that both components can be replaceable simultaneously. Furthermore, due to the placement of the reservoir 176 relative to the adhesive portion 152, the reservoir 176 can be received into the base as to not block surface area of the adhesive portion 152. This arrangement also maximizes the surface area of the adhesive portion 152 for trapping insects.

In other configurations, the insert 150 may not include a reservoir 176. In yet other configurations, the insert 150 does not include a reservoir 176 and the adhesive portions 152 are positioned on both the front and rear face of the insert 150. In such configurations, once the front face has immobilized a sufficient number of insects, the user may remove the insert 150 from the shell 122, rotate the insert 150, and re-insert the insert 150 into the shell 122. In this position, the rear face of the insert 150 is positioned proximate to the openings 132 and can be used to immobilize insects entering the shell.

The frame 166 and the shell 122 may be configured to allow the insert 150 to be selectively engaged to the shell 122. In the illustrated configuration, each of the first and second side edges 154, 156 of the frame 166 has an indentation 162 that is positioned between the termination of the top portion edge 160 and a bottom portion of the frame 166, such as the bottom edge 161. The top edge 159 of each of the indentations 162 may be placed from about 10, 15, 20 mm to about 40, 50, 60, 70, 80, 90 mm above the bottom of the insert 150, for example, as measured vertically from the bottom edge 161 towards the top portion edge 160. As shown in FIG. 4, the shell 122 may have protrusions 140 extending from an inner surface 138. The indentations 162 of the frame 166 may be sized and positioned such that they can engage with and capture the protrusions 140 of the shell 122. As such, the protrusions 140 may be positioned within the shell 122 such that the engagement of the protrusions 140 into the indentations 162 occurs when the insert 150 is fully seated within the shell 150 (i.e., the insert 150 is stopped from further insertion via the top portion 121 of the shell 122).

The indentation 162 on each of the first and second side edges 154, 156 can have a length between about 0.5 mm and about 10 mm and a depth between about 0.5 mm and about 3.5 mm. The protrusions 140 on the inner surface 138 of shell 122 can have a length between about 0.4 mm and about 9.9 mm and a width between about 0.2 mm and about 4 mm. As such, when the insert 150 is fully inserted by the user into the shell 122 through the bottom opening 134, the protrusions 140 on either side of the shell 122 will engage with the respective indentations 162 of the frame 166 to seat the insert 150 within the shell 122. In some configurations, the user will feel the engagement occur, thereby providing the user with tactile feedback. While the selective mechanical engagement of the insert 150 and the shell 122 is facilitated using indentations 162 and matching protrusions 140 in FIG. 4 and FIG. 6, a variety of other suitable configurations may be utilized to seat the insert 150 within the shell 122 without departing from the scope of the current disclosure.

FIG. 7 depicts an isometric view of the base 102. Referring to FIGS. 1-7, the base 102 may have an upwardly extending housing 108 that can house a heat generating element 110. When the cartridge 118 is engaged to the base 102, the upwardly extending housing 108 extends through the bottom opening 134 and into the cavity 135 of the shell 122. The upwardly extending housing 108 is positioned such that when the cartridge 118 is engaged to the base 102, the upwardly extending housing 108 is positioned between the rear housing 128 and the insert 150. When energized by a suitable power source (batteries, wall socket, etc.), the heat generating element 110 warms and heats the upwardly extending housing 108 and the proximate adhesive portion 152 of the insert 150. Warming the adhesive portion 152 may aid in attracting certain types of insects to the insect trapping device 100. For instance, the heated adhesive portion 152 may mimic the thermal signature of a biological surface (i.e., skin). The heat generating element 110 may be, for example, a positive temperature coefficient (PTC) heater, a resistance-based heater, or any other type of element that converts electrical energy into thermal energy. The base 102 may also have a light source 114, illustrated as light emitting diodes (LEDs) 116. The LEDs 116 may use any suitable attachment technology, such as through-hole technology. In some configurations one or more of the LEDs 116 utilize surface-mount technology (SMT) such that the LEDs 116 are a surface-mount device (SMD). LEDs 116 are a form of solid state lighting. Some examples of LEDs include semi-conductor light emitting diodes, polymer light emitting diodes, organic light emitting diodes, etc. Other light sources that may be used include but are not limited to incandescent or filament based lights, fluorescent lights, or halogen lights, or xenon lights. The lights may or may not have a filter to adjust the wavelength of their output. The light source 114 is positioned such that when the cartridge 118 is engaged to the base 102, the light source 114 is positioned between the upwardly extending housing 108 and the insert 150. As such, when the light source 114 is energized, it illuminates the adhesive portion 152.

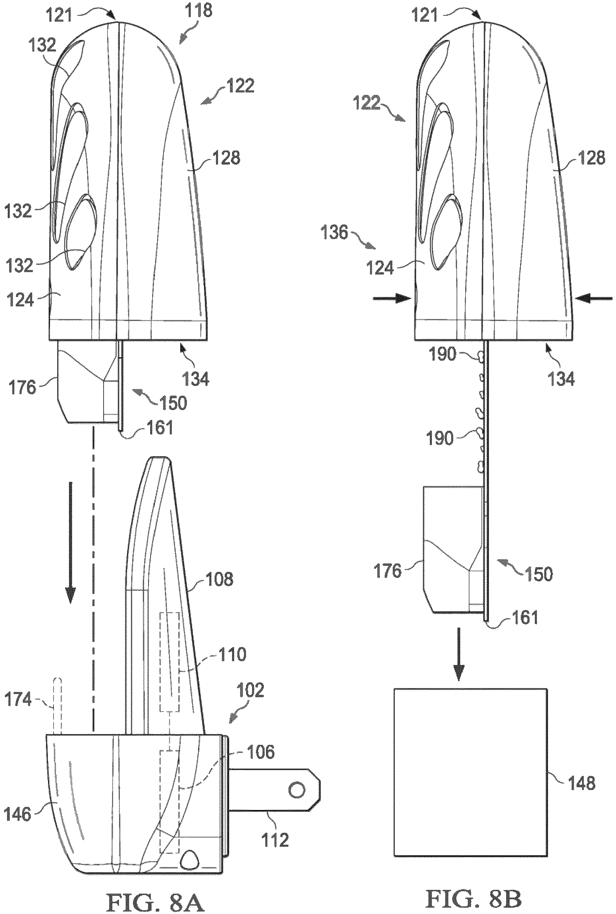

The upwardly extending housing 108 can have a front surface 104 that is concave which serves to form a cavity between the center portion of the upwardly extending housing 108 and the insert 150 when the cartridge 118 is engaged to the base 102. While the front surface 104 of the upwardly extending housing 108 is illustrated as a smooth concave surface, this disclosure is not so limited. The front surface 104 can have any suitable configuration or combination of surfaces that form a concave shape in which the central portion of the front surface 104 is recessed relative to the side portions of the front surface 104 thereby forming an inwardly directed bulge. Example configurations of the front surface 104 can include planar portions, beveled portions, curved portions, curvilinear portions, and so forth. As depicted in FIG. 2, light source 114 may be positioned on the base 102 within the space formed between the upwardly extending housing 108 and the insert 150. The wavelength and type of light source 114 that is utilized can be selected to attract insects that are drawn to certain types of light. Further, a circuit board 106 (FIG. 8A) can be positioned within the base 102 that includes the circuitry for operating the heat generating element 110 and the light source 114. The circuit board 106 may be vertically mounted within the base 102 so that it can be positioned behind the reservoir 176. With the circuit board 106 positioned behind the reservoir 176, the possibility of the insect attracting composition contacting the circuitry is minimized. As shown in FIG. 7, the base 102 may also define a cavity 120 that is sized to receive at least a portion of the reservoir 176 when the shell 122 is coupled to the base 102.

To couple the cartridge 118 to the base 102 to prepare the insect trapping device 100 for use, the cartridge 118 is lowered over the upwardly extending housing 108, such that the upwardly extending housing 108 is received into the shell 122 and positioned between a rear surface of the adhesive portion 152 and an inner surface of the rear housing 128, as shown in FIG. 8A. A portion of the base 102 may be received into the cavity 135 (FIG. 3B) through the bottom opening 134. The base 102 may engage with a bottom portion of the shell 122 to mechanically engage the cartridge 118 to the base 102. Such engagement may utilize a friction-fit connection, or other suitable type of connection, such as utilizing a clip, latch, magnet, or detent, for example, to maintain the coupling between the shell 122 and the base 102 until the user wishes to decouple the cartridge 118 and the base 102. Once the cartridge 118 is affixed to the base 102, the insect trapping device 100 can then be operated to attract and immobilize insects. It is noted, however, that in some configuration the cartridge 118 may be utilized to attract and immobilize insects without being coupled to the base 102. For instance, subsequent to inserting the insert 150 into the shell 122, the cartridge 118 may be placed on a table, floor, or other suitable surface, and utilize the insect attracting composition within the reservoir 176 to draw insects into the shell 122 so they will be captured by the adhesive portion 152.

In some configurations, the base 102 comprises at least one upstanding tab that limits deflection of one or more of the front surface of the shell 122 and/or the rear surface of the shell 122 when the cartridge 118 engages the base 102 and the force is applied to the shell 122. FIG. 8A depicts an example upstanding tab 174 (shown in phantom) that is positioned to limit the deflection of the front housing 124 of the shell 122 when the cartridge 118 engages the base 102 and the force is applied to the shell 122. As such, the upstanding tab 174 can mitigate the risk of the inadvertent releasing of the insert 150 from the shell 122 when the cartridge 118 is being attached to or removed from the base 102. The upstanding tab 174 may also include a dimple or other type of detent that is configured to match a corresponding dome or other feature on the inner surface 138 of the shell 122 to profile a user with tactile feedback when the shell 122 is properly seated. Such mechanical features can also help pull the shell 122 into its seated positioned as the user 122 engages the shell 122 to the base 102.

At a later point in time, such as when the insect attracting composition is exhausted and/or the adhesive portion 152 needs to be replaced, the cartridge 118 may be disengaged from the base 102 by a user. As the cartridge 118 is lifted from the base 102, the insert 150 will remained seated within the shell 122 due to the interaction between the indentations 162 and the protrusions 140 or other type of mechanical engagement (e.g., a friction fit). As such, the user will not need to come into direct physical contact with the frame 166 or the adhesive portion 152 to remove the cartridge 118 from the base 102. The cartridge 118 may then be positioned above a trash receptacle 148 (FIG. 8B) in preparation for releasing the insert 150 from the shell 122. In order to release the insert 150, the user applies a force on the front housing 124 and/or the rear housing 128, such as by squeezing the shell 122 with the index finger and thumb. In some configurations, the front housing 124 and/or the rear housing 128 may have a dimple, dome, ring, graphic and/or other physical feature to assist the user in identifying where to apply force on the front housing 124 and/or the rear housing 128. Due to the shell 122 having a bottom opening 134 (FIG. 3B), the insert 150 may be dispensed from the shell 122 without the need to invert the shell 122 or the insert 150. As such, any attractant remaining in the reservoir 176 when the insert 150 is released from the shell 122 will likely remain in the reservoir until the insert 150 lands in the trash receptacle 148.

As shown in FIG. 8B, the user may, for instance, apply force on a lower portion 136 of the shell 122. The lower portion 136 may have a height from about 1.5 mm, 2, 4, 6, 8, 10 mm to about 28, 30 32, 34, 36, 40, 45 mm. The lower portion 136 may be positioned adjacent to the bottom opening 134, which facilitates a sufficient amount of flexing when a user squeezes the shell 122. Further, the wall thickness of the front housing 124 and/or the rear housing 128 may be sufficient to provide the desired amount of flexibility. In some configurations, the wall thickness of the front housing 124 and/or the rear housing 128 is between about 0.25 mm and 5 mm. When the shell 122 is squeezed by the user, the shell 122 will flex such that the center portions of the front housing 124 and the rear housing 128 inwardly deflect and will be brought closer together. The force is applied by user with his or her fingers. In some configurations, the force applied to the shell 122 may be about 1 N, 2, 3, 4, 5, 6 to about 20, 24, 26, 28, 30, 32, 34, 36, or 50 N. In some configurations, it may be desirable to apply a lighter hand force, such as between 10 N and 35 N. The deflection of the front housing 124 and/or the rear housing 128 may be from about 1 mm to about 30 mm at the location where the force is applied. As the center portions of the front housing 124 and the rear housing 128 inwardly deflect, the side portions of the front housing 124 and the rear housing 128 will outwardly deflect. In some configurations, the application of the force causes a total outward deflection of the shell between about 0.2 mm and about 4, 6, 8, 10 mm at a point between about 0.2 mm and about 30 mm from the bottom of the shell 122. As the side portions outwardly deflect, the protrusions 140 on the inner surface 138 of the shell 122 will be laterally drawn from the indentations 162 of the frame 166 to disengage the insert 150 from the shell 122. Once the insert 150 is disengaged from the shell 122, gravitational force will cause the insert 150 to fall downward through the bottom opening 134 and into the trash receptacle 148. As such, the user does not need to physically contact the frame 166 to release the insert 150 from the shell 122, thereby minimizing or eliminating incidental contact with any insects 190 immobilized on the adhesive portion 152 or the adhesive portion 152 itself. Additionally or alternatively, a user may wish to grasp a portion of the insert 150 and pull the insert 150 from the shell 122 while simultaneously squeezing the front housing 124 and the rear housing 122, as described above. Once the insert 150 has been dispensed from the shell 122, the user can release the shell 122 such that the front portions of the front housing 124 and the rear housing 128 and the protrusions 140 return to their original positions to accommodate the insertion and retaining of a fresh insert 150.

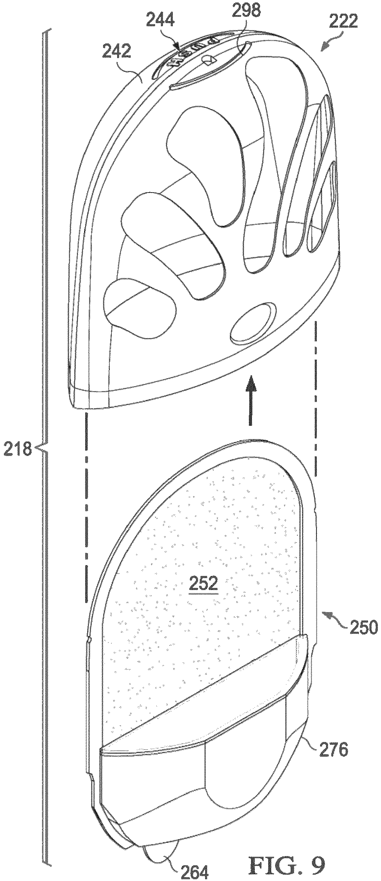

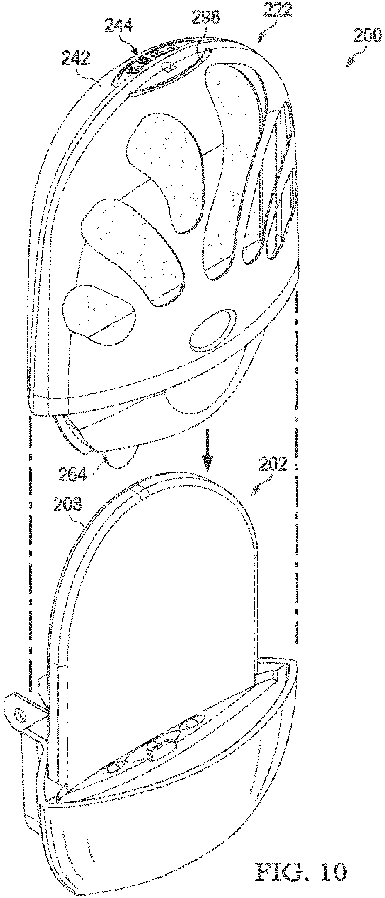

FIGS. 9-10 illustrate an insect trapping device 200 according to another embodiment. The insect trapping device 200 can be similar to or the same in many respects as the insect trapping device 100. For example, the insect trapping device 200 can include a cartridge 218 having a shell 222 and an insert 250 that can be engaged with a base 202. As shown, the base 202 has an upwardly extending housing 208 that is received into the shell 222. The insert 250 has an adhesive portion 252 and a reservoir 276. The insert 250 can have one or more releasable liners that cover and protect the adhesive portion 252 and/or the reservoir 276. Such releasable liners can be removed by the user prior to insertion of the insert 250 into the shell 222. The shell 222 can be configured similarly to the shell 122 of FIG. 4, such that when force is applied to a portion of the shell 222, the insert 250 is released and can be dispensed from the cartridge 218 through a bottom opening 234. The cartridge 218 further comprises, however, a downwardly depending tab 264. The downwardly depending tab 264 can be positioned on the shell 222 or the insert 250, as shown. A switch (not shown) is positioned the base 202 that receives the downwardly depending tab 264 when the cartridge 218 engages the base 202. The switch in the base 202 can function to operate one or more of the insect attractants (i.e., heating element, light source, etc.), so that such insect attractants can only be energized when the cartridge 218 is engaged to the base 202. As such, when the cartridge 218 is removed from the base 202, the switch is deactivated and power is removed from the insect attractants.

The downwardly depending tab 264 can be positioned such that a vertical centerline of downwardly depending tab 264 is offset from a vertical centerline of the insert 250. Offsetting of the downwardly depending tab 262 may serve to aid in properly aligning the cartridge 218 with the base 202. More specifically, the cartridge 218 may only be fully seated into the base 202 when the cartridge 218 is facing the proper direction so that the downwardly depending tab 264 is received into the switch. Furthermore, the downwardly depending tab 264 can help to insure the insert 250 is properly arranged in the shell 222, such that the adhesive portion 252 is positioned adjacent the openings in the front surface of the shell 222 as opposed to facing the upwardly extending housing 208. The downwardly depending tab 264 can also function as a convenient grip point for the user during insertion or removal of the insert 250. The downwardly depending tab 264 can have any suitable configuration or shape. In some configurations, the downwardly depending tab 264 has a width at its vertical midpoint that is less than 75% the width of the bottom edge of the insert 250. In some configurations, the downwardly depending tab 264 has a width at its vertical midpoint that is less than 50% the width of the bottom edge of the insert 250. In some configurations, the downwardly depending tab 264 has a width at its vertical midpoint that is less than 25% the width of the bottom edge of the insert 250. In some configurations, the downwardly depending tab 264 has a width at its vertical midpoint that is less than 10% the width of the bottom edge of the insert 250. In some configurations, the downwardly depending tab 264 overlaps the vertical centerline of the insert 250 while being asymmetric about the vertical centerline of the insert 250. It is also to be appreciated that other inserts described herein, such as the insert 150 can also utilize a downwardly depending tab similar to the downwardly depending tab 264.

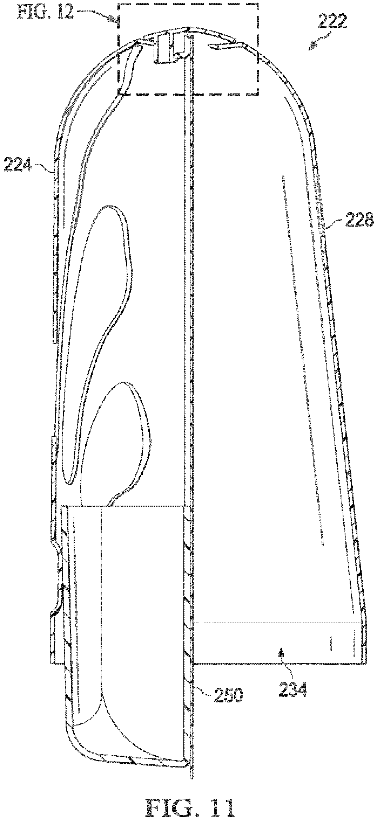

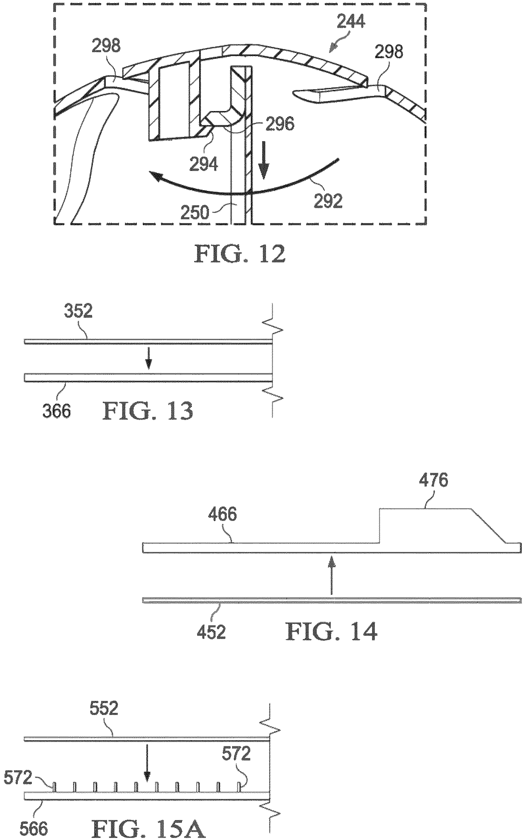

The shell 222 in FIGS. 9-10 also has a depressible tab 244 that is positioned proximate to the top of the shell 222. FIG. 11 shows a cross-sectional view of the shell 222 and FIG. 12 shows an enlarged view of the top portion of the shell 222. The depressible tab 244 is formed in the top surface 242 through the formation of grooves 298 in shell 222 that form a hinged connection allowing the depressible tab 244 to pivot when pressed by a user. A flange 294 is coupled to the depressible tab 244 and positioned internal to the shell 222. As shown in FIG. 12, the flange 294 pivots in the direction indicated by arrow 292 when the depressible tab 244 is pressed by a user. The insert 250 includes a shoulder 296 positioned proximate the top of the insert 250 that hooks the flange 294 when the insert 250 is inserted into the shell 222. As such, when the shoulder 296 is in the position illustrated in FIG. 12, the insert 250 is retained within the shell 222 due to the mechanical engagement of the shoulder 296 and the flange 294. As shown in FIG. 12, the flange 294 can be wedge-shaped to aid in the shoulder 296 temporarily pivoting the flange 294 in the direction indicated by the arrow 292 until the shoulder 296 passes by the flange 294. Once the shoulder 296 passes the flange 296, the flange 296 returns to its initial position to retain the insert 250 until the depressible tab 244 is subsequently pressed by the user.

When the user wishes to dispense the insert 250 from the shell 222, the depressible tab 244 is pressed by the user to pivot the flange 294 away from the shoulder 296. Once the flange 294 pivots past the shoulder 296, the flange 294 disengages the shoulder 296 and gravitational force or other externally provide force may pull the insert 250 from the shell 222, similar to FIG. 8B, without requiring the user to come in direct contact with the adhesive portion 252 or any other portion of the insert 250. Once the spent insert 250 has been released, a fresh insert 250 can be inserted into the shell 222. The top portion of the fresh insert 250 can have a shoulder 296 that engages the flange 294 upon insertion.

Turning now to techniques for forming inserts for use with the insect trapping devices described herein, a variety of manufacturing and/or assembly techniques can be used. Such techniques may vary depending on, for instance, whether the insert is framed or frameless, has a reservoir, and/or includes a release liner, among other factors. Referring now to FIGS. 13-18, example inserts are depicted to illustrate example techniques for attaching an adhesive portion to a frame or other type of substrate. FIG. 13 depicts an exploded side view of a frame 366 and an adhesive portion 352. In this configuration, an adhesive is applied to the periphery of the adhesive portion 352 and/or the frame 366 and the adhesive portion 352 affixed to the front of the frame 366.

FIG. 14 depicts an exploded side view of a frame 466 and an adhesive portion 452. The frame 466 has a reservoir 476, which may be similar to reservoir 176 (FIG. 6), for example. In this configuration, the adhesive around the periphery of the adhesive portion 452 is utilized to affix the adhesive portion 452 to the frame 466. As the frame 466 at least partially forms or defines an open interior portion, the adhesive in the central portion of the adhesive portion 452 remains exposed after attachment to the frame 466. Accordingly, a first portion of the adhesive of the adhesive portion 452 is used to attach the adhesive portion 452 to the frame (i.e., the portion of the adhesive portion 452 that overlaps the frame 466) and a second, portion of the adhesive of the adhesive portion 452 is used to immobilize insects (i.e., the portion of the adhesive portion 452 positioned within the central opening of the frame 466).

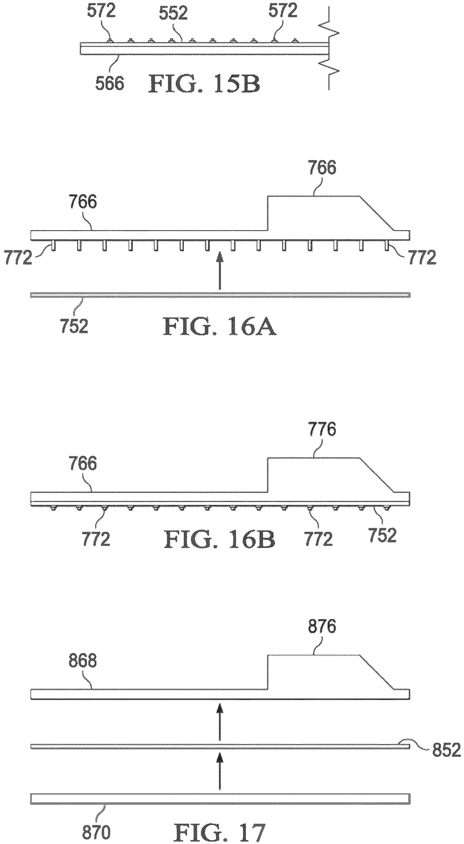

FIGS. 15A-15B depict an exploded side view of a frame 566 and an adhesive portion 552 and a view of the adhesive portion 552 affixed to the frame 566, respectively. The frame 566 has plurality of protrusions 572 extending outward from its face. The protrusions 572 are received into a plurality of corresponding apertures or notches in the adhesive portion 552 such that the protrusions 572 capture the adhesive portion 552 (as shown in FIG. 15B). In some configurations, in addition to the protrusions 572, an adhesive can also be used to affix the adhesive portion 552 to the frame 566.

FIGS. 16A-16B depict an exploded side view of a frame 766 and an adhesive portion 752 and a view of the adhesive portion 752 affixed to the frame 766, respectively. Similar to FIG. 14, a reservoir 776 is positioned on the front of the frame 766. A plurality of protrusions 772 extend from a back side of the frame 766 that are configured to capture the frame 766 (as shown in FIG. 16B). While FIGS. 16A-16B depict the adhesive portion 752 extending along the frame 766 proximate to the back side reservoir 776, in other configurations, the adhesive portion 752 may be only be positioned proximate to a central opening of the frame 766 and not extend past the rear wall of the reservoir 776.

FIG. 17 depicts a configuration in which the frame comprises a front portion 868 and a rear portion 870. The adhesive portion 852 is positioned between the front portion 868 and the rear portion 870 such that when joined together, at least a portion of the periphery of the adhesive portion 852 is captured between the front portion 868 and the rear portion 870. Adhesive can be used between each of the layers.

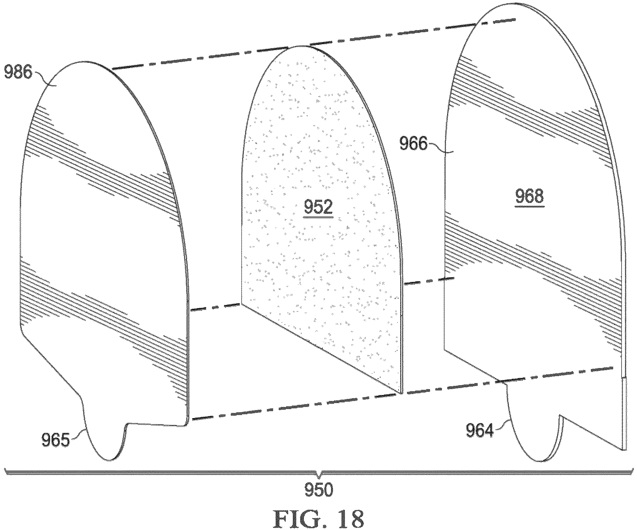

FIG. 18 depicts an exploded view of an insert 950 having a frameless configuration. As shown, an adhesive portion 952 is affixed to a substantially solid base member 968. The base member 968 can be, for instance, semi-rigid card stock, or other suitable material. The base member 968 can include a downwardly depending tab 964 that can function to provide a gripping point for the user and also be used to activate a switch in an insect trapping device, as described above. While FIG. 18 illustrates that the vertical centerline of the downwardly depending tab 964 is generally aligned with a vertical centerline of the base member 968, in other configurations the vertical centerline of the downwardly depending tab 964 is offset from the vertical centerline of the base member 968. Further, while FIG. 18 depicts the adhesive portion 952 being positioned on a first side of the base member 968, this disclosure is not so limited. In some configurations, for instance, a second adhesive portion is affixed to the side of the base member 968. Such configuration (sometimes referred to as a doubled-sided insert) may allow for the insert 950 to be removed from a shell, flipped by the user, and then re-inserted into the shell for future use. Also, shown in FIG. 18 is a releasable liner 986 that can be affixed to the base member 968 to cover and protect the adhesive portion 952 prior to use. As with other inserts described herein, the releasable liner 986 can be added to the insert 950 (and/or a reservoir of the insert) during manufacture such that the insert 950 is packaged and shipped with the releasable liner 986 covering the adhesive portion 952. Immediately prior to inserting the insert 950 into a shell of an insect trapping device, the user can remove and dispose of the releasable liner 950 to expose the adhesive portion 952 and prepare the insert 950 for use. In the illustrated configuration, the releasable liner 986 includes a tab 965 that is disconnected from the base member 968 to provide a grip point for the user.

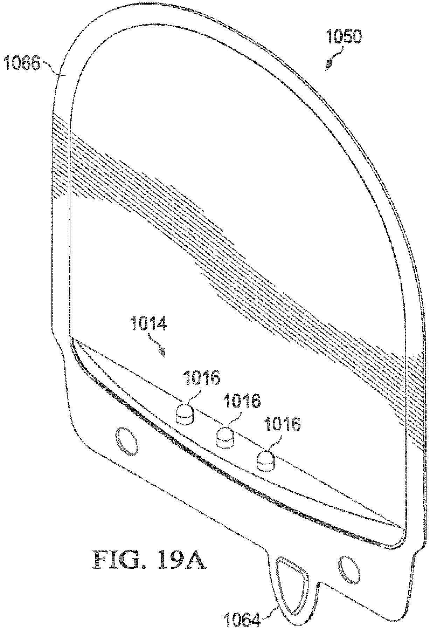

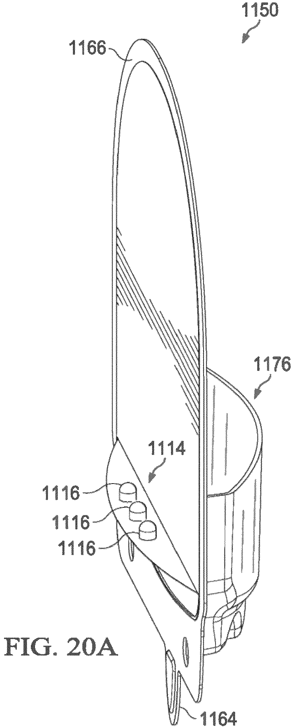

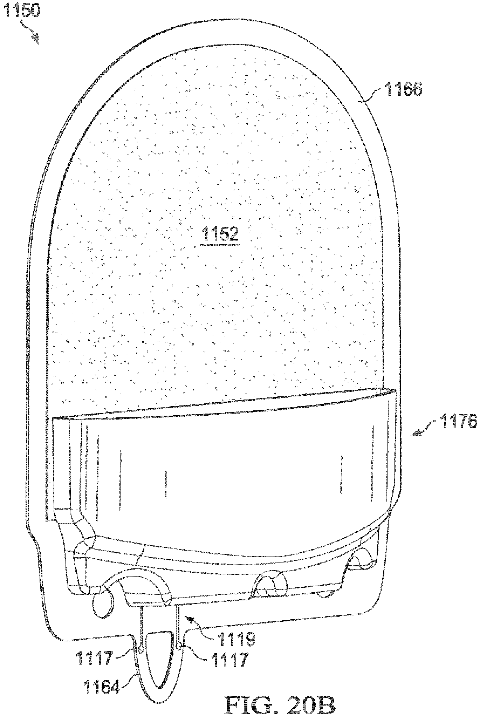

Referring now to FIGS. 19A-19B and 20A-20B, example inserts that include light sources are depicted. Such inserts may be used with bases that do not have light sources. FIGS. 19A-19B depict isometric views of an insert 1050 that does not include a reservoir. Similar to other inserts described herein, the insert 1050 has an adhesive portion 1052 that is surrounded by a frame 1066. While not illustrated, the insert 1050 can also include indentations or other suitable features for providing mechanical engagement with a corresponding shell. The insert 1050 also has a light source 1014, which is shown to include a set of LEDs 1016. The LEDs 1016 are positioned behind the adhesive portion 1052, such that the rear face of the adhesive portion 1052 is illuminated upon activation of the LEDs 1016. The insert 1050 also has a downwardly depending tab 1064 extending from a lower portion of the insert 1050. The vertical centerline of the downwardly depending tab 1064 is offset from the vertical centerline of the insert 1050 and is positioned to be received into a switch of a corresponding base. The downwardly depending tab 1064 also has electrical contacts 1017 that are positioned to come into electrical contact with corresponding contacts in a base of an insect trapping device. Once in the electrical contact, power can be provided through the electrical contacts 1017 and circuitry 1019 to illuminate the light source 1014 and/or other attractants that may be onboard the insert 1050.

FIGS. 20A-20B depict isometric views of an insert 1150 that is similar to the insert 1050, except that it includes a reservoir 1176. Similar to the insert 1050, the insert 1150 has an adhesive portion 1152 that is surrounded by a frame 1166. The insert 1150 also has a light source 1114, which is shown as a set of LEDs 1116. The LEDs 1116 are positioned on the opposite side of the insert 1150 from the reservoir 1176 such that once the insert 1150 is slid into a shell, the LEDs 1116 are positioned behind the adhesive portion 1152. The insert 1150 also has a downwardly depending tab 1164 extending from a lower portion of the insert 1150 which as electrical contacts 1117, similar to the arrangement as described above in FIGS. 19A-19B. Once in the electrical contact with a base, power can be provided through the electrical contracts 1117 and circuitry 1119 to illuminate the light source 1114 and/or other attractants that may be onboard the insert 1150.

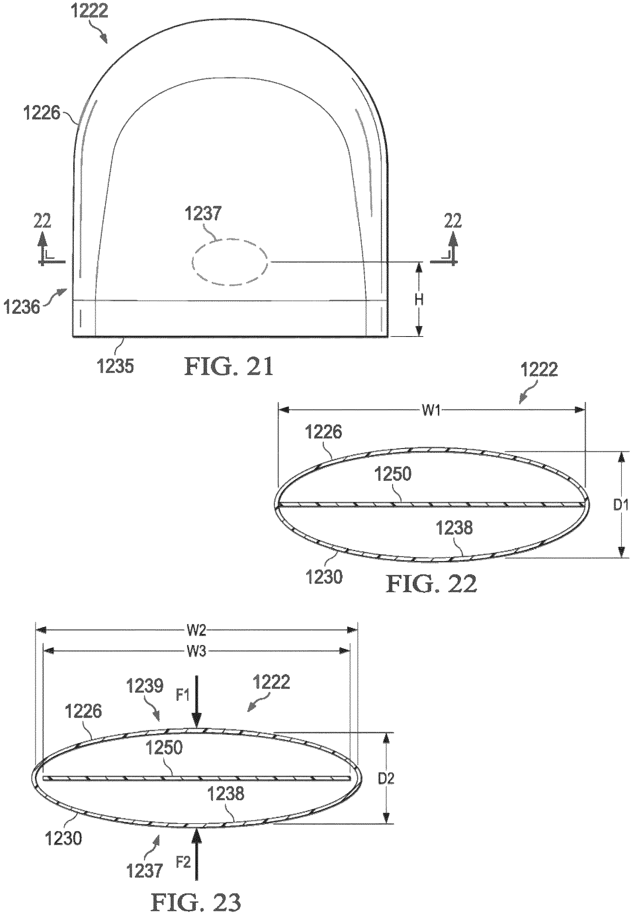

Referring now to FIGS. 21-23, a simplified depiction of a shell 1222 and an insert 1250 are illustrated. FIGS. 21-23 generally depict the deflection of various portions of the shell upon application of force to one or more of its outer surfaces. FIG. 22 is a cross-sectional view of FIG. 21 taken along line 22-22 and FIG. 23 depicts the shell 1222 while inwardly directed forces F1 and F2 are applied. When inserted into the shell 1222, the insert 1250 is mechanically engaged with a portion of an inner surface 1238 of the shell 1222 (i.e., via interlocking features, a friction fit, or otherwise) such that insert 1250 is retained within the shell 1222. As shown in FIG. 22, in a resting positon, the shell 1222 has an interior width (W1) and an interior depth (D1). As shown in FIG. 23, in a squeezed positon (i.e., during application of force by a user), the shell 1222 has an interior width (W2) and an interior depth (D2). As illustrated, the interior width W2 is larger than the interior width W1 and the interior depth D2 is smaller than the interior depth D1. A user can apply the force to a front zone 1237 of a front surface 1226 of the shell 1222 in order to dispense the insert 1250. The front zone 1237 may be positioned within a lower portion of the shell 1222 and be graphically and/or texturally identified an outer surface 1230. The front zone 1237 is positioned at a height (H) above a bottom 1235 of the shell 1222. In some configuration, the user may simultaneously apply force to a rear zone 1239 (FIG. 23) of the shell 1222, such as by squeezing the front zone 1237 and the rear zone 1239 using the thumb and forefinger.

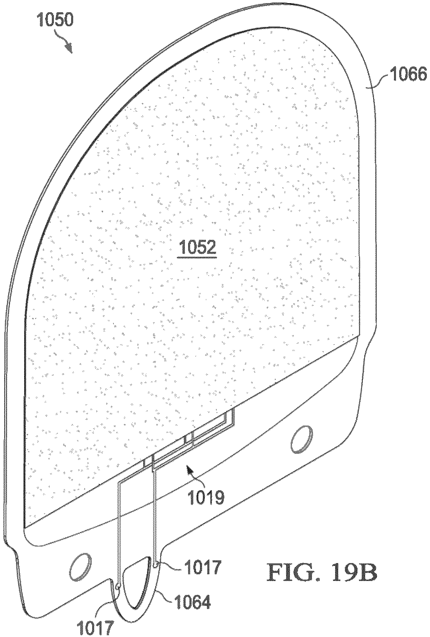

When no force is applied to the shell 1222, the interior width (W1) of the shell 1222 can be between about 50 mm and about 150 mm at a point between about 1 mm and about 100 mm from the bottom of the shell (shown as (H) in FIG. 19). The interior depth (D1) of the shell can be between about 20 mm and about 100 mm at a point between about 1 mm and about 100 mm from the bottom of the shell when no force is applied to the shell (FIG. 22).

When the force is applied, the interior width (W2) of the shell can be between about 51 mm and about 165 mm at a point between about 1 mm and about 100 mm from the bottom of the shell (shown as (H) in FIG. 19).. The interior depth (D2) of the shell can be between about 10 mm and about 99 mm at a point between about 1 mm and about 100 mm from the bottom of the shell when the force is applied to the shell (FIG. 23).

In some configurations, the insert 1250 and the shell 1222 have an interference fit between about 0.2 mm and about 4 mm when no force is applied to the shell 1222. As such, the user may apply force to the front zone 1237 and the rear zone 1239 during insertion of the insert 1250 to provide sufficient clearance. The increase of the interior width from W1 to W2 serves to disengage the insert 1250 from the inner surface 1238, thereby allowing gravitational force to pull the insert 1250 from the shell 1222 so that it can be disposed of by the user. While the amount of force applied to one or more surfaces of a shell to release an insert can vary, (shown as forces F1 and F2 in FIG. 23), in some configurations the force is between about 1 N and about 36 N. The amount of force required to release the insert 1250 may depend upon the type of mechanical engagement. For instance, insect trapping devices utilizing a friction-fit coupling may require more or less force to release the insert than insect trapping devices utilizing protrusion/indention coupling.

When inserting a fresh insert 1250 into the shell 1222, a certain amount of force may be necessary to properly seat the insert 1250. This insertion force may be approximately 0 N for 10% to 50/70% the insert length and then 1.25 N to 44 N to finally seat the insert 1250 within the shell 1222. Alternatively, the insertion force may be 1.25 N to 44 N at any point during insertion. For friction fit couplings, the user may squeeze the shell 1222 at zones 1237 and 1239 in order to expand the interior width from W1 to W2 and thus ease insertion.

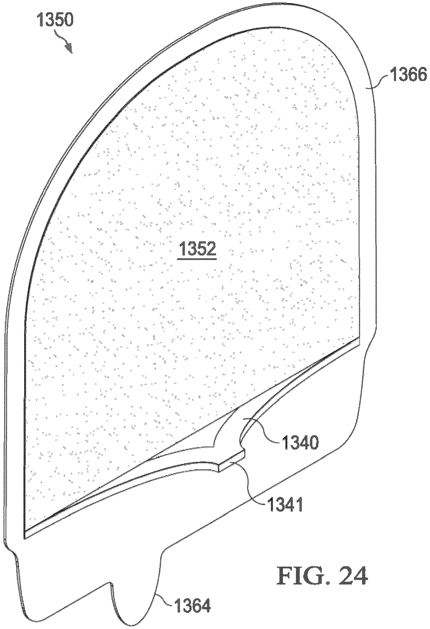

While the cartridges described above depict the application of the inwardly directed force to the front surface and/or rear surface to disengage an insert (i.e., proximate to the front zone 1237 in FIG. 21), in other example cartridge configurations, applying an inwardly directed force to the side surfaces of a shell, as opposed to the front/rear surfaces, releases the insert. As used herein, the side surfaces of a shell refer to the portions of a shell outer surface where a front surface of a front housing meets a rear surface of a rear housing. Such inwardly directed force can be applied by a hand of the user when the side surfaces of a cartridge are gripped between the user's thumb and one or more fingers after the cartridge has been removed from a base. As the side surfaces are deflected inward by a squeezing force, other portions of the front housing and/or rear housing may deflect outward. Such outward deflection may allow for an insert positioned within the shell to be released and removed. FIG. 24 depicts an isometric view of example insert 1350 that may be used with shells configured to release an insert upon the application of an inwardly directed force to the side surfaces of the shell. The insert 1350 may be similar to other inserts described herein, such that it has an adhesive portion 1352 that is surrounded by a frame 1366. In other configurations, however, the insert 1350 may be frameless. The insert 1350 can also have a downwardly depending tab 1364 extending from a lower portion of the insert 1350. In the illustrated configuration, a ledge 1340 is positioned beneath the adhesive portion 1352 that protrudes outward from front surface of the insert 1350. The ledge 1340 can be integrally formed with the frame 1366 or otherwise attached thereto. The ledge 1340 can have an engagement surface 1341 at its distal end that is configured to engage an inner surface of a shell, as described in more detail below. While FIG. 24 depicts one example structural arrangement of the ledge 1340 and the engagement surface 1341, other arrangements of these features can be used without departing from the scope of the present disclosure.

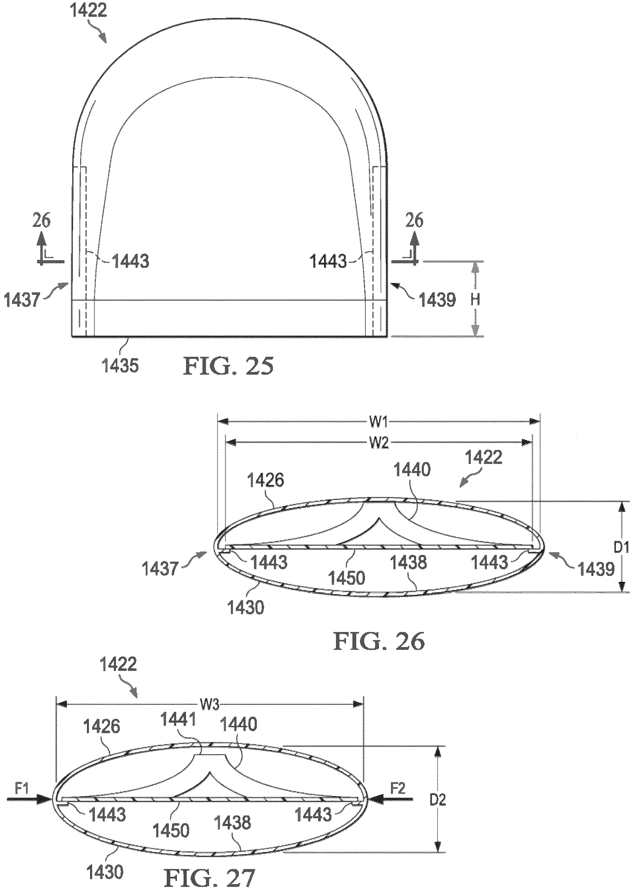

Referring now to FIGS. 25-27, a simplified depiction of a shell 1422 and an insert 1450 are illustrated. FIGS. 25-27 generally depict the deflection of various portions of the shell 1422 upon application of force to one or more of its side surface. FIG. 26 is a cross-sectional view of FIG. 25 taken along line 26-26 and FIG. 27 depicts the shell 1422 while inwardly directed forces F1 and F2 are applied. The insert 1450 is similar to the insert 1350 as it has a ledge 1440 protruding from its front side which has an engagement surface 1441 (FIG. 27). When fully inserted into the shell 1422, the insert 1450 is mechanically engaged with the inner surface 1438 of the shell such that insert 1450 is retained within the shell 1422. The insert 1450 can utilize a three-point connection to the shell 1422. As shown, the side portions of the insert 1450 may engage with side rails 1443 that inwardly extend from the inner surface 1438 of the shell 1422. The side rails 1443 may extend from the inner surface of the shell 1422 generally parallel to the insert 1450. As shown in FIG. 26, the insert 1450 does not necessarily completely overlap the side rails 1443, as to form a gap on either side of the insert 1450 between the inner surface 1438 of the shell 1422 and the side edges of the insert 1450. The insert 1450 can be biased against the side rails 1443 due to the engagement surface 1441 of the ledge 1440 interaction with the inner surface 1438 of the shell 1422 (FIG. 26).

As shown in FIG. 26, in a resting positon, the shell 1422 has an interior width (W1) and an interior depth (D1). The insert 1450 has a width (W2), which is slightly wider than the gap between the opposing side rails 1443. As shown in FIG. 27, in a squeezed positon (i.e., during application of forces F1 and F2 by a user to the side of the shell 1422), the shell 1422 has an interior width (W3) and an interior depth (D2). As illustrated, the interior width (W3) is smaller than the interior width (W1), as the two sides are squeezed together. However, the interior width (W3) can still be at least slightly wider than the insert width (W2), as to avoid the sides of the shell 1422 exerting an inward force on the insert 1450, which may impede removal of the insert 1450 from the shell 1422. During the application of forces F1 and F1 the interior depth (D2) is greater than the interior depth (D1). As the interior depth increases from D1 to D2, the engagement surface 1441 of the ledge 1440 separates from the inner surface 1438 (as shown in FIG. 27) thereby removing the biasing force that was holding the insert 1450 against the side rails 1443. The insert 1450 can then be pulled from the shell 1422, either by gravitational force or the user.

A user can apply the forces F1 and F2 to a first side zone 1437 and/or the second side zone 1439 of the shell 1422, respectively, to dispense the insert 1450, or in some cases, to assist with inserting the insert 1450 into the shell 1422. The first side zone 1437 and second side zone 1439 are proximate to where a front surface 1426 and a rear surface 1430 join. In some configurations, the first side zone 1437 and the second side zone 1439 may be positioned within a lower portion of the shell 1422 and be graphically and/or texturally identified an outer surface 1430. In the illustrated configuration, the first side zone 1437 and the second side zone 1439 are positioned at a height (H) above a bottom 1435 of the shell 1422. In some configuration, the user may simultaneously apply force to first side zone 1437 and the second side zone 1439 of the shell 1422, such as by squeezing first side zone 1437 and the second side zone 1439.

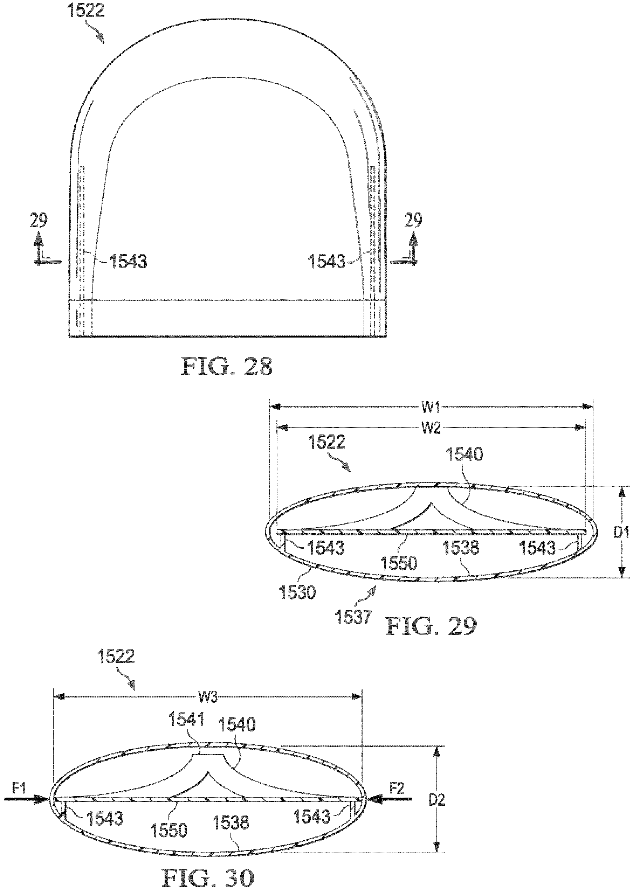

Referring now to FIGS. 28-30, a simplified depiction of another example shell 1522 and an insert 1550 are illustrated. FIG. 29 is a cross-sectional view of FIG. 28 taken along line 29-29 and FIG. 30 depicts the shell 1522 while inwardly directed forces F1 and F2 are applied to its side surfaces. The insert 1550 is similar to the insert 1450 as it has a ledge 1540 protruding from its front side which has an engagement surface 1541 (FIG. 27). In this configuration, the shell 1522 also has side rails 1543 that extend from the inner surface 1538 of the shell 1522. However, the side rails 1543 of the shell 1522 extend generally perpendicularly to the insert 1550. The insert 1550 can be biased against the side rails 1543 due to the engagement surface 1541 of the ledge 1540 interaction with the inner surface 1538 of the shell 1522 (FIG. 29). The insert 1550 has a width (W2) that is slightly wider than the gap between the opposing side rails 1443. The insert 1550 can be dispensed from the shell 1522 similarly as shown in FIG. 27, as application forces F1 and F2 as shown in FIG. 30 increases the interior depth from D1 to D2 and decreasing the interior width from W1 to W3, thereby disengaging the engagement surface 1541 from the inner surface 1538 and removing the biasing force against the side rails 1543.

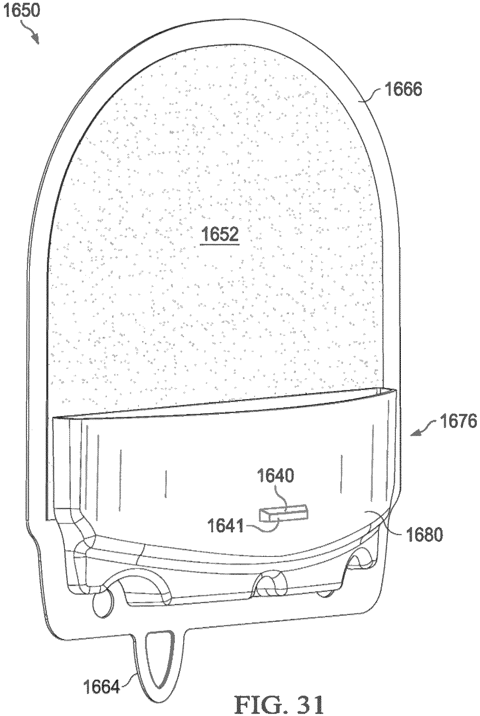

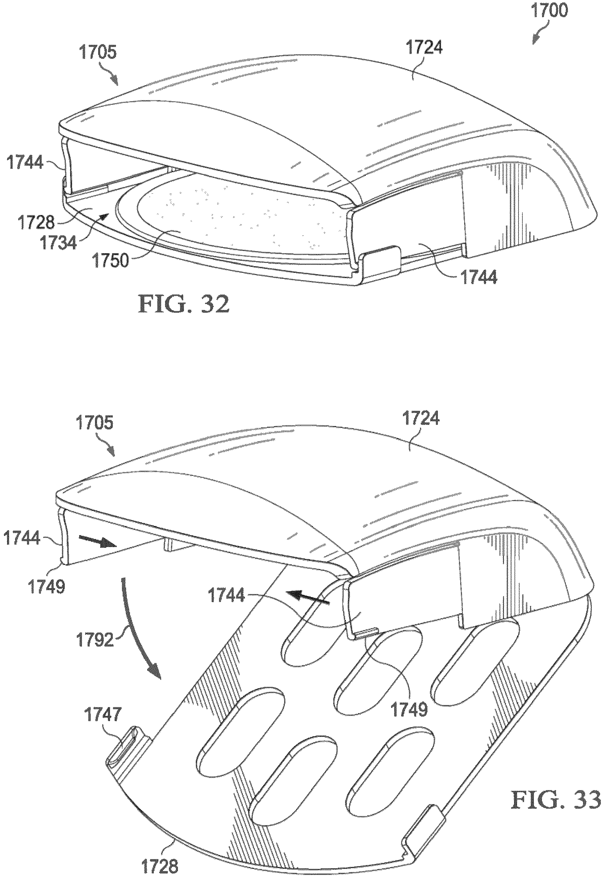

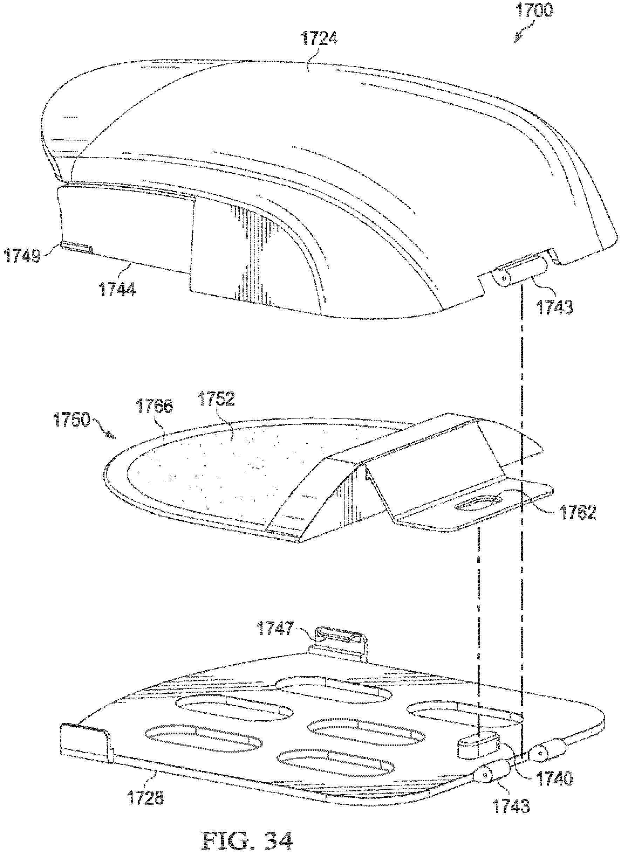

Referring now to FIG. 31, an example insert 1650 is illustrated which includes a reservoir 1676. The insert 1650 can be usable in shells 1422, 1522, for example, and includes an adhesive portion 1652 surrounded by a frame 1666 and a downwardly depending tab 1664. A ledge 1640 extends from a front wall 1680 of the reservoir 1676. An engagement surface 1641 on the distal end of the ledge 1640 is positioned such that it engages an inner surface of a shell, similar to the engagement surfaces 1441 and 1551 described above. As is to be appreciated, other configurations of inserts having light sources can also include ledges with engagement surfaces to allow for these inserts to be used with shells similar to shells 1422 and 1522. Referring now to FIGS. 32-36, another example insect trapping device 1700 is depicted. The illustrated insect trapping device 1700 does not utilize attractants that require a power supply. As such, the insect trapping device 1700 can be placed on a surface, such as a floor, counter, or shelf and capture crawling insects. The insect trapping device 1700 has a front housing 1724 and a rear housing 1728 that collectively form an enclosure 1705 defining an opening 1734 for receiving a flying or crawling insect. As shown in the exploded view of the insect trapping device 1700 illustrated in FIG. 26, the front housing 1724 is connected to the rear housing 1728 by a hinge 1743. The enclosure 1705 is selectably movable between a closed position (FIG. 32) and an open position (FIG. 33). In the open position, at least a portion of the front housing 1724 is separated from the rear housing 1728 to facilitate removal of an insert 1750. Similar to previously described configurations, the insert 1750 can include an adhesive portion 1752 that immobilizes insects. The insert 1750 can be releaseably retained within at least a portion of the insect trapping device 1700 when the enclosure 1705 is in the closed position (FIG. 32). In some configurations, the insert 1750 includes an aperture 1762 that engages with a protrusion 1740 of the rear housing 1728. Other types of temporary couplings can be used without departing from the scope of the current disclosure.

As shown in FIG. 32, the front housing 1724 can include depressible tabs 1744 that are positioned on opposing sides of the opening 1734. The depressible tabs 1744 include lips 1749 that are configured to engage with rails 1747 of the rear housing 1728. When in the closed position (FIG. 32), the rails 1747 engage with the lips 1749 to maintain the relative positioning of the front housing 1724 and the rear housing 1728, thereby retaining the insert 1750. When a user squeezes the depressible tabs 1744, as shown in FIG. 33, the lips 1749 disengage from the rails 1747 thereby allowing the rear housing 1728 to pivot about the hinge 1743 and swing away from the front housing 1724 in the direction indicated by arrow 1792. With the rear housing 1728 hanging from the hinge 1743, gravitational force can pull the spent insert 1750 from the protrusion 1740 for disposal. A user can place a fresh insert on the rear housing 1728 and re-engage the lips 1749 with the rails 1747 to return the enclosure 1705 to the closed position and prepare the device for use.

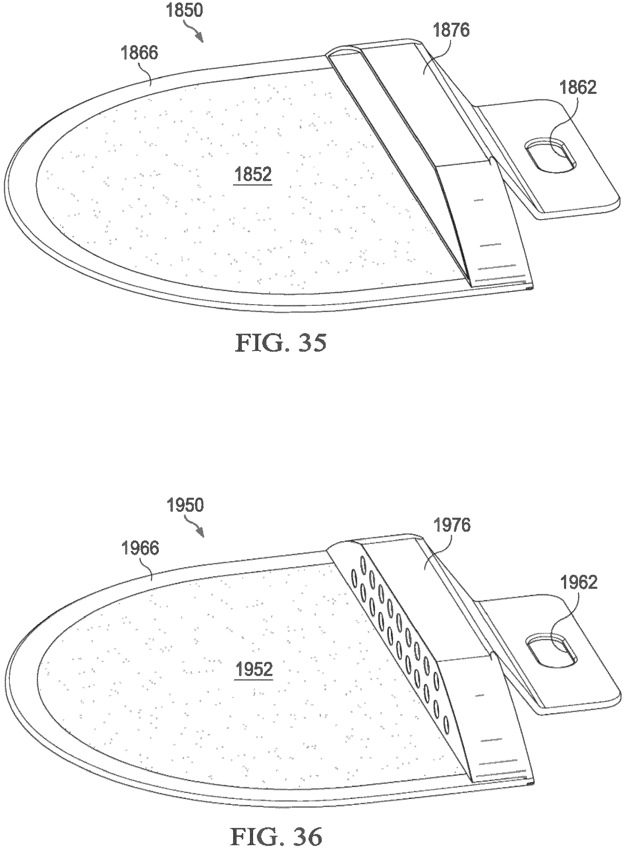

In some configurations, inserts usable with the insect trapping device 1700 can include various types of attractants. FIGS. 3536 illustrate inserts that include reservoirs for storing gelled insect attractants that are each usable with the insect trapping device 1700. Referring first to FIG. 35, an insert 1850 is illustrated that has a frame 1866 and an adhesive portion 1852. A reservoir 1876 is defined by a portion of the frame 1866. The reservoir 1876 can store an insect attracting composition, such that during use an insect may be drawn into the opening 1734 of the insect trapping device 1700. FIG. 36 depicts an insert 1950 which also has a frame 1966 and an adhesive portion 1952. A reservoir 1976 is defined by a portion of the frame 1966. In this configuration, the frame 1966 defines a plurality of apertures proximate to the reservoir 1976. Such apertures can, for instance, reduce an evaporation rate of the insect attracting composition or otherwise aid in keeping the insect attracting composition within the reservoir 1976. The reservoirs 1876 and 1976 can each store an insect attracting composition, such that during use an insect may be drawn into the opening 1734 of the insect trapping device 1700. Both inserts 1850 and 1950 can also be discharged from the insect trapping device 1700 without requiring the user to come into direct physical contact with a frame or an adhesive portion of the respective insert.

## Claims

1. An insert for an insect trapping device, the insert comprising:
an adhesive portion comprising an adhesive for trapping an insect;
a frame at least partially surrounding the adhesive portion, the frame comprising two side edges, a bottom edge, and a downwardly depending tab extending downward from the bottom edge, wherein a vertical centerline of the downwardly depending tab is offset from a vertical centerline of the adhesive portion.

2. An insert according to the preceding claim, further comprising a releasable liner that covers the adhesive portion.

3. An insert according to any of the preceding claims, wherein the insert further comprises a reservoir storing an insect attracting composition, wherein the reservoir is defined by a front wall that extends away from the adhesive portion and a substantially planar rear wall.

4. An insert according to claim 3, wherein the reservoir, the frame, and the substantially planar rear wall are integrally formed.

5. An insert according to one of claims 3 to 4, wherein the adhesive portion has a front surface comprising the adhesive and wherein the insect attracting composition is on the same side of the insert as the front surface of the adhesive portion.

6. An insert according to one of claims 3 to 5, wherein the reservoir comprises a reservoir opening disposed above the insect attracting composition and wherein the adhesive portion terminates adjacent to the reservoir opening.

7. An insert according to any of the preceding claims, wherein the insert is devoid of a shell enclosing the adhesive portion.

8. An insert according to any of the preceding claims, wherein
the insert is configured for insertion into a shell for use with an insect trapping device, the shell having one or more protrusions extending from an inner surface of the shell, and
the frame further comprises a top portion having a height and a top portion edge that terminates at the side edges, each of the side edges having an indentation positioned within 2 mm of the termination of the top portion edge.

9. A cartridge for use with a base, the cartridge comprising:
an insert according to any of claims 1 to 8;
a shell comprising a front surface defining an opening for receiving a flying or crawling insect, a rear surface and a bottom comprising an opening, wherein the opening in the bottom is disposed adjacent to the base when the cartridge engages the base; and
the insert is releaseably retained at least partially within the shell and at least a portion of the insert passes through the opening in the bottom when inserting the insert into the shell; and
wherein the shell and insert are configured to drop the insert out of the opening in the bottom in response to an application of an inwardly directed force to one or more of the front surface of the shell or a rear surface of the shell by a user.

10. A cartridge according to claim 9, wherein the shell and insert are configured to drop the insert out of the shell without the user touching the adhesive portion.

11. A cartridge according to any of claims 9 to 10, wherein the shell and insert are configured to drop the insert out of the shell due to gravity following application of the force.

12. A cartridge according to any of claims 9 to 11, wherein application of the force causes an inward deflection of one or more of the front surface of the shell and the rear surface of the shell at the location where the force is applied.

13. A cartridge according to any of claims 9 to 12, wherein the insert comprises two side edges, each of the side edges having an indentation that releasably engages a corresponding protrusion on an inner surface of the shell.

14. A cartridge according to claim 13, wherein application of the force causes the protrusions to disengage from the indentations thereby releasing the insert from the shell.

15. A cartridge according to any one of claims 9 to 14, comprising an insert according to any of claims 3 to 6 wherein at least a portion of the reservoir extends below the bottom of the shell.

16. A cartridge according to one of claims 9 to 15, wherein the insert is releaseably retained within the shell by a friction fit.

17. A method of using a cartridge according to any of claims 9 to 16, comprising:
grasping the shell having the insert at least partially disposed therein; and
applying an inwardly directed force to one or more of the front surface of the shell or the rear surface of the shell; and
in response to the application of the force, dropping the insert out of the opening in the bottom due to gravity.
